# EUROPEAN PATENT APPLICATION

(11) **EP 4 844 435 A1**
(43) Date of publication of application: **25.11.2026**
(21) Application number: 25178553.1
(22) Date of filing: 23.05.2025
(51) Int. Cl.: G01S 7/02, G01S 7/28, G01S 13/50

(54) **DIGITAL RADAR SYSTEM AND METHOD**

(71) Applicant: NXP B.V., 5656 AG Eindhoven (NL)
(72) Inventor: ONEN, Cagan, 5616 LH Eindhoven (NL); PANDHARIPANDE, Ashish, 5629 NT Eindhoven (NL)
(74) Representative: Schwarzweller, Thomas

(57) **Abstract**

The disclosure relates to mitigating interference in a digital radar system. Example embodiments include a method of operating a radar system by generating and transmitting a first and second frames, the second transmitted frame having a frequency shift, receiving (702₁, 702₂) first and second received frames (701₁, 701₂) comprising reflections from the transmitted frames and interference, down-converting, digitising and processing (703₁, 703₂) the received frames to provide first and second Doppler range maps (RDM₁, RDM₂), identifying (704) targets in the first and second Doppler range maps having matching Doppler peaks as interference peaks, and removing (706) the identified interference peaks from the first and second range Doppler maps.

## Description

### Field

The disclosure relates to mitigating interference in a digital radar system.

### Background

Interference in radar systems, in particular vehicle radar systems, is a challenge that needs to be addressed to achieve reliable sensing, for example to support a safe and reliable advanced driver-assistance system (ADAS). Current FMCW-based radar systems may be affected by interference, whether intentional or unintentional, that can result in 'ghost' targets and other features that can affect reliability. Digital radar can address these issues through use of unique spreading codes, which may be more robust to interference. Digital radar systems can, however, suffer in performance under certain interference scenarios. Mitigating the effects of such interference may be challenging using conventional techniques.

### Summary

According to a first aspect there is provided a method of operating a radar system, the method comprising: generating and transmitting a first transmitted frame at a carrier frequency, the first transmitted frame comprising a plurality of coded sequences; generating and transmitting a second transmitted frame at the carrier frequency shifted by a frequency shift, the second transmitted frame comprising the plurality of coded sequences; receiving first and second received frames comprising reflections from the respective first and second transmitted frames and interference; down-converting and digitising the received first and second received frames; processing the down-converted and digitised first and second received frames to provide first and second range Doppler maps (RDMs); identifying targets in the first and second RDMs having matching Doppler peaks as interference peaks; and removing the identified interference peaks from the first and second RDMs.

The method mitigates radar interference in the radar system through use of frequency shifting within the signal bandwidth between consecutive transmitted frames so that any interference signals that do not shift along with the applied frequency shift can be detected and removed.

The radar system may be a PMCW radar system, OFDM (orthogonal frequency division multiplexing) radar system, or FMCW (frequency modulated continuous wave) radar system with digital coding.

The method may include removing the frequency shift from the second RDM to provide a compensated second RDM and combining peak detections from the first RDM with peak detections from the compensated second RDM to provide an output combined peak detection set.

The method may further comprise: determining first and second numbers of identified targets in the respective first and second RDMs; and if the first and second numbers are unequal, detecting a false negative attack.

A magnitude of the frequency shift may be up to around $\frac{{f}_{c} {v}_{max , eff}}{c}$ when binary phase codes with a low Doppler tolerance are used in a PMCW radar, where *v_{max,eff}* is the maximum effective velocity assuming that the targets lie in the (*-v_{max,eff}, v_{max,eff}* ) region and c is speed of light. In example implementations, a magnitude of the frequency shift may be between around 10 kHz and around 100 kHz.

The magnitude of the frequency shift may be between around $\frac{{f}_{c} {v}_{max , eff}}{c}$ and around $\frac{{f}_{c} {v}_{max}}{c}$ when Doppler tolerant binary phase codes are used in a PMCW radar, where *vₘₐₓ* is the maximum unambiguous velocity detectable by the radar system. In example implementations, the magnitude of the frequency shift may be between around 40 kHz and around 50 kHz.

The method may be repeated using a different value for the frequency shift. The different value may be randomly selected from within a defined frequency range.

The first and second frames may be transmitted at different power levels and the method may comprise identifying targets in the first and second Doppler range maps having matching Doppler peak power levels as interference peaks.

According to a second aspect there is provided a radar system comprising: a transmitter configured to generate and transmit frames at a carrier frequency comprising a plurality of coded sequences, the transmitter comprising a frequency shifter arranged to apply a frequency shift to the carrier frequency of transmitted frames; a receiver configured to receive, down-convert and digitize frames comprising reflections from the transmitted frames; a processor configured to processing down-converted and digitised frames to provide range-Doppler maps; and a controller configured to: operate the transmitter and frequency shifter to generate and transmit a first transmitted frame at the carrier frequency and to generate and transmit a second transmitted frame at the carrier frequency shifted by a frequency shift; operate the receiver to receive first and second received frames comprising reflections from the respective first and second transmitted frames and interference, down-convert and digitize the received first and second received frames and process the down-converted and digitised first and second received frames to provide first and second range Doppler maps (RDMs); identify targets in the first and second RDMs having matching Doppler peaks as interference peaks; and remove the identified interference peaks from the first and second RDMs.

The radar system may be a PMCW radar system, OFDM (orthogonal frequency division multiplexing) radar system, or FMCW (frequency modulated continuous wave) radar system with digital coding.

The controller may be configured to remove the frequency shift from the second RDM to provide a compensated second RDM and combine detections from the first RDM with detections from the compensated second RDM to provide an output combined detection set.

The controller may be configured to: determine first and second numbers of identified targets in the respective first and second RDMs; and if the first and second numbers are unequal, detect a false negative attack.

A magnitude of the frequency shift may be between around 10 kHz and around 100 kHz, optionally between around 40 kHz and around 50 kHz.

The controller may be configured to repeatedly operate the transmitter and receiver using a different value for the frequency shift. The different value may be randomly selected from within a defined frequency range.

The controller may be configured to cause the first and second frames to be transmitted at different power levels and identify targets in the first and second RDMs having matching peak power levels as interference peaks.

These and other aspects of the invention will be apparent from, and elucidated with reference to, the embodiments described hereinafter.

### Brief description of Drawings

Embodiments will be described, by way of example only, with reference to the drawings, in which:
Figure 1 is a schematic diagram illustrating an example frame of a digital PMCW radar signal;
Figure 2 is a schematic diagram of radar signals transmitted from a vehicle and radar signals received from a target;
Figure 3 is a schematic diagram illustrating example steps of a false positive (FP) attack and a false negative (FN) attack in a PMCW radar system;
Figure 4 is a schematic diagram of radar signals transmitted from a vehicle and radar signals received from different targets;
Figure 5 is a schematic diagram illustrating an example PMCW radar system;
Figure 6 is a schematic diagram of an example velocity spectrum and corresponding Doppler spectrum;
Figure 7 is a flow diagram illustrating a sequence of operations carried out by a radar system to detect and mitigate false positive and false negative attacks;
Figure 8 is an example Doppler plot indicating first and second target peaks;
Figures 9 to 14 illustrate example range Doppler maps from received first and second frames with a frequency shift in the second frame; and
Figure 15 is a flow diagram illustrating an example method of operating a PMCW radar system.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments.

### Detailed description of embodiments

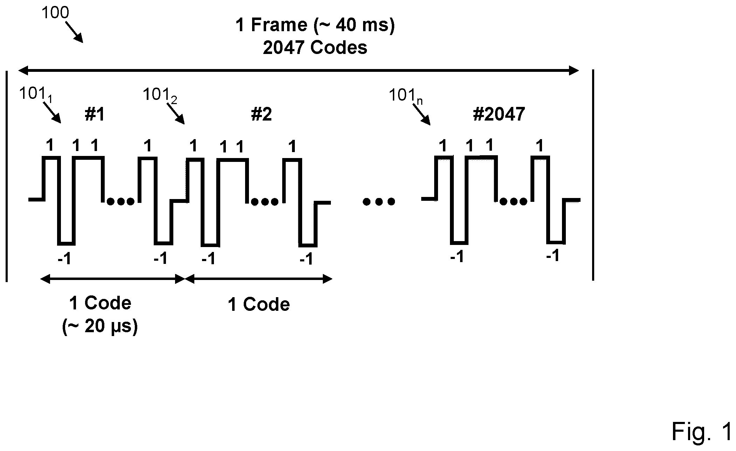

Figure 1 illustrates an example frame 100 for a PMCW radar transmission. The frame 100 comprises a plurality of coded elements 101₁₋ₙ, where n in this example is 2047. Each coded element defines a binary sequence, and in the illustrated example each sequence is around 20 µs long, making each frame around 40 ms long. The parameters of each frame may include the duration of each coded element, the number of coded elements and the bandwidth used. The parameters used may differ across different radar systems. In a conventional PMCW radar system, reflected signals from each frame are down-converted and processed to provide a map comprising range, Doppler and angle estimates for identified targets, enabling the location and relative speed of the identified targets to be detected.

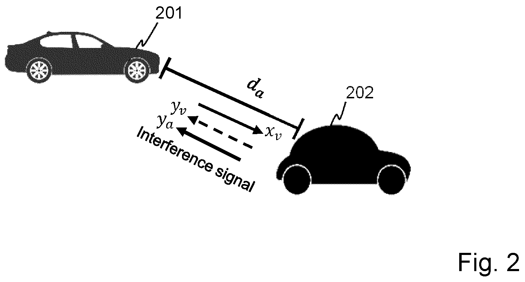

Interference from a second PMCW radar system may affect the detection performance of a first PMCW radar system. As illustrated in Figure 2, first and second PMCW radar systems are provided on board respective first and second vehicles 201, 202. The first radar system transmits a first PMCW signal *xᵥ*, which consists of repeated copies of a binary phase code *cᵥ* modulated at a carrier frequency *f_{c}*. The second PMCW radar system is located at a distance *dₐ* with velocity *vₐ* relative to the first PMCW radar system, and transmits a second PMCW signal *xₐ*, which consists of repeated copies of the binary phase code *cₐ* modulated at a carrier frequency *f_{c} + f_{off},* where *f_{off}* is a frequency offset to the carrier frequency *f_{c}.* The transmit code of the second PMCW signal may be another code from the same family or may be a code from another family.

An interference signal *yₐ* and the reflected signal from the target *yᵥ* are both received at the first PMCW radar system. Range information can be estimated by correlating *yᵥ* with *cᵥ* and locating a peak. However, as *cᵥ* is different from *cₐ*, correlating *cᵥ* with *yₐ* does not lead to a peak in any range bin. In the special case where *cₐ* and *cᵥ* are the same, autocorrelation concentrates the interferer energy in a single range bin. The detected range bin does not necessarily reflect the actual range of the interferer since the first and second radar systems are not synchronized in time.

The velocity of the target, in this case the second vehicle 202, is detected by resolving a Doppler frequency shift via applying FFT over slow time. The interfering energy at a frequency *f_{I}* is concentrated to the Doppler bin, which is given by: ${f}_{I} = \frac{{f}_{DS}}{2} + {f}_{Off}$ when the pulse repetition intervals (code lengths) of the radars match. Here, *f_{DS}* is the Doppler shift due to the relative velocity interferer with respect to the second PMCW radar system. If there is no carrier offset (i.e. *f_{off}* = 0), then the energy is concentrated at the Doppler bin corresponding to half the relative velocity. If the pulse repetition intervals do not match, then the interfering energy is spread over the whole Doppler spectrum.

The effect of correlated interference can be described in the form of six cases, as set out in Table 1 below.

**Table 1 - Effects of correlated interference for different cases**

| **Case** | **First & Second System Comparison** | **Effect** |
|---|---|---|
| Case 1 | Same PRI, same code, no carrier offset | Strong target at half interferer velocity |
| Case 2 | Same PRI, same code, with carrier offset | Single ridge at another velocity |
| Case 3 | Same PRI, different code, no carrier offset | Single ridge at half interferer velocity |
| Case 4 | Same PRI, different code, with carrier offset | Single ridge at another velocity |
| Case 5 | Different PRI, different code, no carrier offset | Multiple ridges |
| Case 6 | Different PRI, different code, with carrier offset | Multiple ridges |

Radar spoofing may also be considered a form of interference. This is the intentional generation of false signals, with the intent to deceive or manipulate a radar system. An attacker may perform spoofing attacks on an automotive radar to either create ghost objects, or false negatives, which represent missed targets that are actually present. The goal of an attacker may for example be to independently spoof a victim radar's range and velocity, causing a false negative or a false positive sensing outcome, where the victim radar either fails to detect existing physical objects or detects non-existing objects. In a false positive (FP) attack, ghost objects (i.e. virtual objects that do not actually exist) are created by generating radar signals that are interpreted as reflections by the victim. In a false negative (FN) attack, the approach of the attacker is to transmit a signal that adds clutter around a desired target to lower the detection probability of the object by affecting the threshold of detection in algorithms such as CA-CFAR (cell averaging CFAR), OS-CFAR (ordered statistic CFAR) or a variant thereof.

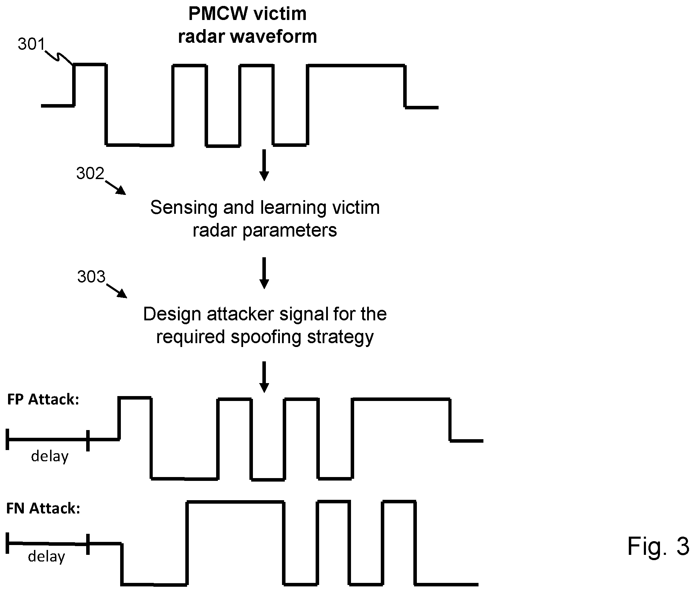

Figure 3 illustrates schematically how false positive and false negative attacks are implemented on a PMCW radar system. A first step for the attacker is to learn the waveform parameters of the victim radar signal 301. This is done in a first sensing step 302 that involves subsequent parameter estimation on the received signal. Having learnt the waveform parameters, in a second step 303 the attacker constructs a spoofing radar signal intended to replicate a real signal that would be received by victim radar system. The type of attack depends on which parameters match between the victim and spoofing signals. In a false positive (FP) attack, if the PRI, code length and phase code match, a ghost target can be created. This creates the same effect as the mutual interference cases 1 & 2 in Table 1 above. If the carrier frequency is matched, the velocity of the ghost target can be controlled by adding a corresponding frequency shift to the spoofing signal. The range of the ghost target depends on the distance between the radar systems and an additional delay, which can also be induced into the spoofing signal. A ghost target at a specific location can be created by manipulating the delay of the spoofing signal.

In a false negative (FN) attack, if the PRI and the code length is matched but a different code is used, a ridge shaped clutter pattern at a desired Doppler bin is created, which can mask any actual targets within this Doppler bin. This creates the effect of the mutual interference cases 3 & 4 in Table 1 above. If the carrier frequency is matched, the Doppler bin in which the clutter will be added can be controlled by adding the corresponding frequency shift to the spoofing signal.

The problem to be addressed may be formulated in terms of how to mitigate both unintentional and intentional interference. Mutual interference occurs when a radar system unintentionally disrupts another radar's operations by transmitting overlapping signals. Radar spoofing is the intentional generation of false signals to deceive or manipulate a radar system. Both mutual interference and radar spoofing can produce similar effects on the victim radar, such as ghost targets or masking of existing targets, with the extent and characteristics of these effects depending on the how closely the parameters of the interfering or spoofing signal match those of the victim radar. The problem may therefore be defined as how to develop an effective strategy to mitigate radar interference and thereby enhance the detection performance of a radar system in one or more of the cases set out above.

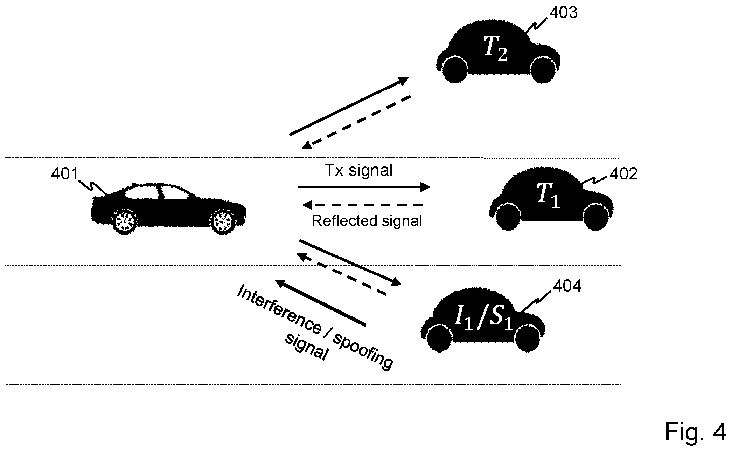

Figure 4 illustrates schematically a situation in which a radar system onboard a vehicle 401 transmits radar signals and receives signals from first and second targets 402 (T₁), 403 (T₂) in the form of reflected signals, together with further signals from a third target 404 acting as an interference source, which transmits interference or spoofing signals as well as reflected signals. The targets 402, 403, 404 may be other vehicles or other targets that may be moving or stationary relative to the vehicle 401.

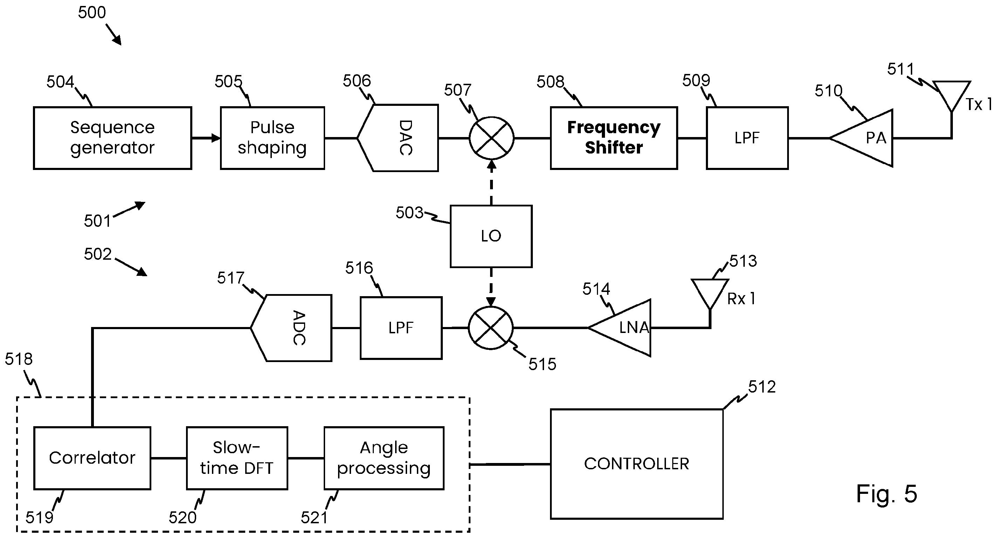

Figure 5 illustrates an example PMCW radar system 500 that may be provided as the radar system for the vehicle 401 of Figure 4. The radar system 500 comprises a transmitter 501 and a receiver 502, with a common local oscillator (LO) 503 configured to generate a carrier frequency signal for an upconverter 507 in the transmitter 501 and a down-converter 515 in the receiver 502. The transmitter 501 is configured to generate and transmit frames at a carrier frequency comprising a plurality of coded sequences and comprises a frequency shifter 508 arranged to apply a frequency shift to the carrier frequency of transmitted frames. The receiver 502 is configured to receive, down-convert and digitize frames comprising reflections from the transmitted frames. A PMCW digital radar system is used herein as an example implementation but the principles disclosed may also apply to other types of digital radar systems based on for example OFDM or FMCW.

The transmitter 501 comprises a sequence generator 504, pulse shaper 505 arranged to provide digital sequences to a DAC 506. An output of the DAC 506 is provided to the upconverter 507, which generates an RF signal for transmission from the carrier frequency signal provided by the LO 503 and digital sequences. The RF signal is provided to a frequency shifter 508, followed by a transmitter low pass filter (LPF) 509 (to suppress any unwanted high-frequency components in the baseband signal at the DAC output) and a power amplifier (PA) 510 before being transmitted via a transmit antenna 511. The frequency shifter 508 may be implemented using a single sideband RF mixer, the basic principle of which is described for example by Choong-Yul Cha et al., in "A fast frequency/mode switching quadrature SSB mixer/amplifier for the low power MTG in MB-OFDM UWB radio transceiver," Digest of Papers. 2006 Topical Meeting on Silicon Monolithic Integrated Circuits in RF Systems, San Diego, CA, USA, 2006. A controller 512 controls operation of the sequence generator 504 and frequency shifter 508 to provide desired coded sequences with a controlled frequency shift, as described further below.

The receiver 502 comprises a receiver antenna 513 and low noise amplifier (LNA) 514, which provide received signals to the down-converter 515, which combines the received signals with the carrier frequency signal provided by the LO 503. A down-converted signal is provided to an analog to digital converter (ADC) 517 via a receiver low pass filter 516. A digital output of the ADC 517 is provided to a signal processor 518, which in the illustrated example comprises a correlator 519, slow-time DFT (discrete Fourier transform) module 520 and angle processing module 521. The processor 518 may also comprise other components for processing the digitized received signals under control of the controller 512. The controller 512 operates and receives an output of the signal processor 518 and may interface with other components to provide output information of the radar system 500.

During operation of the radar system 500, a first PMCW radar frame is transmitted via the transmit antenna 511 and a reflected signal is received via the receiver antenna 513. After down-conversion and processing, a Doppler-range map is provided with peaks and ridges representing targets in the received signal, some of which may be ghost targets. The first PMCW radar frame is transmitted with the frequency shifter 508 turned off, such that the signal is transmitted at the carrier frequency generated by the LO 503.

Before sending a second PMCW radar frame, the controller 512 enables the frequency shifter 508 to apply a predetermined frequency offset. The second PMCW radar frame, which may be otherwise identical to the first PMCW radar frame, is then transmitted with a pre-imposed Doppler shift introduced into the transmitted signal. The frequency shift *f_{D}* applied to the transmit signal should maintain the transmit signal within the filter bandwidth of the receiver. The receiver bandwidth, which may for example be around 500 MHz, is typically relatively large compared to the Doppler shift applied, since high-speed ADCs are generally used for PMCW radars. Therefore, shifts of the order of tens of kHz may be suitable for this approach.

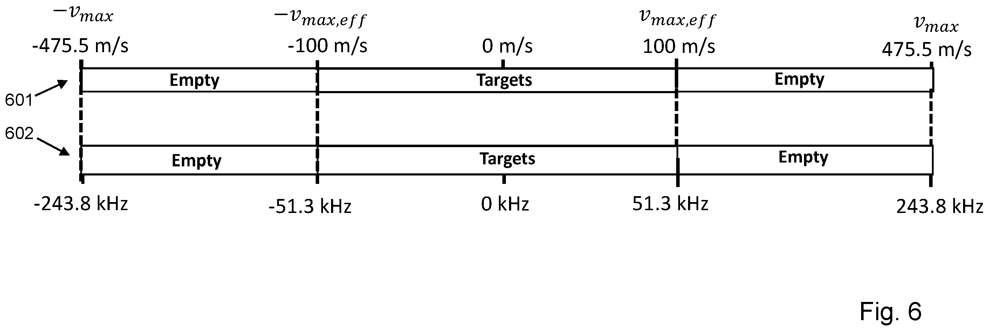

Figure 6 illustrates a specific example of a velocity spectrum 601 and a corresponding Doppler spectrum 602 for a PMCW radar system. Deviations of up to around +/- 51.3 kHz correspond to maximum effective relative velocity changes of +/- 100 m/s, within which all typical relative velocities will be observed for a vehicle radar system. The useable velocity spectrum may extend to +/- 475.5 m/s, corresponding to frequency deviations of +/- 243.8 kHz.

If it can be assumed that the velocity of any typical targets lie within the *v_{max,eff}* = +/-100 *m*/*s* region, the frequency shift *f_{D}* can be chosen to shift targets to the empty regions between *v_{max,eff}* and *vₘₐₓ*. For example, an appropriate choice of frequency shift *f_{D}* can be +/- 51.3 kHz for the case illustrated in Figure 6.

A Doppler shift will tend to disrupt the autocorrelation and cross-correlation properties of binary phase codes. How much their performance degrades will depend on the Doppler tolerance of the chosen code family. To avoid performance degradation from the additional Doppler shifts due to frequency shifts, a code family having a higher tolerance to Doppler shifts may be used. Example code families such as Gold sequences or other Doppler-tolerant sequences may be used. For example, a frequency shift of 51.3 kHz translates to adding a Doppler shift that corresponds to 100 m/s on top of the transmitted sequences. This can lead to performance degradation if Doppler intolerant code families such as APAS are used. In these cases, smaller frequency shifts may be chosen, and the targets can be shifted within the ±*v_{max,eff}* region. In a general aspect therefore, the frequency shift may be between around 10 kHz and around 100 kHz, and in particular examples between around 40 kHz and around 60 kHz.

A more sophisticated spoofer device may be configured to learn that frequency shifting is being employed, especially if it is a simple pattern. To avoid this, a different frequency shift may be chosen for different measurement frames, i.e. repeating the method of transmitting first and second frames with the carrier frequency being shifted by a different frequency shift for the second frame. The frequency shifts may be randomly or pseudo-randomly selected. Additionally, other transmitter characteristics may be varied, for example using power control. In this approach, the transmit power may be altered between measurement frames and the peaks or ridges whose power level do not change may be detected as interference or spoofing.

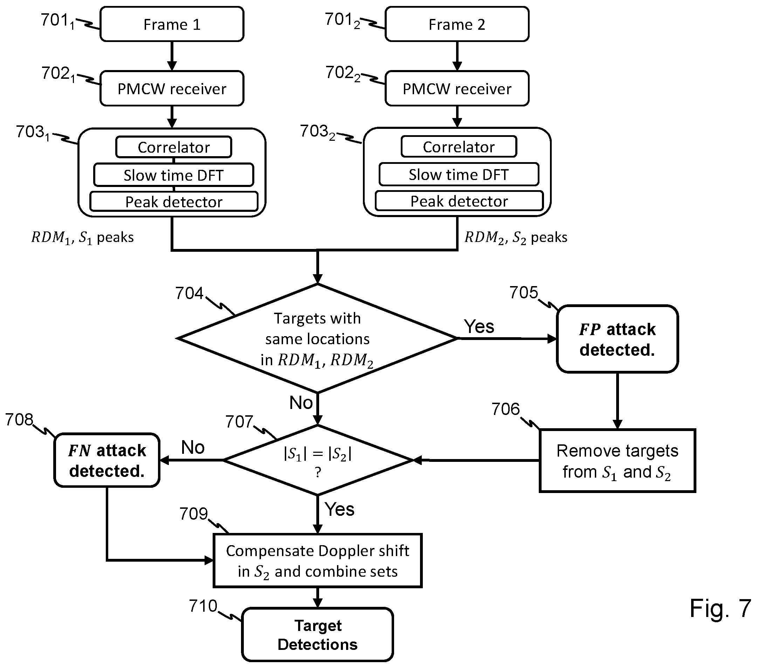

Figure 7 illustrates schematically a series of steps outlining how first and second frames are processed by the receiver 502 of the PMCW radar system 500. First and second frames 701₁, 701₂ are received by the receiver 502, the first frame comprising reflections from a first frame transmitted with no frequency shift and the second frame comprising reflections from a second frame transmitted with a frequency shift. At steps 702₁, 702₂ the PMCW receiver 502 receives, down-converts and digitizes each frame. At steps 703₁, 703₂ the processor 518 processes each digitized frame via a correlator, slow time DFT and peak detector. This results in processed range-Doppler maps RDM₁, RDM₂ with respective numbers of detected peaks S₁, S₂. At step 704, the RDMs are compared to determine any targets in both RDM₁ and RDM₂ that are at the same location, i.e. having matching Doppler peaks. If matching peaks are found, at step 705 a false positive (FP) attack is identified. At step 706, the matching peaks are removed from the set of peaks S₁, S₂. At step 707, a comparison is made of the number of peaks S₁, S₂. If the number of peaks is not equal, at step 708 a false negative attack is detected. A masked target can then be exposed after the applied frequency shift is compensated for and the target can be added to a detection list.

If, for example, the number of detected targets is higher in the RDM from the second frame, this means that one or more targets were masked by interference/spoofing ridges in the RDM from the first frame. At step 709, the Doppler shift in RDM₂ is compensated for and the peak detections from the two RDMs are combined to provide a combined set of detections , which is output at step 710 as a set of detected targets with any false positives removed and any masked targets included.

In a simulated arrangement, two vehicles were defined as point targets with a 10 dBsm RCS, a first target T₁ having a relative velocity of -16.74 m/s and a range of 17.58 m and a second target I₁/S₁ having a relative velocity of 20 m/s and a range of 5.01 m. The second target either has an interfering radar I₁ or a spoofing radar S₁.

A list of the radar parameters used in the simulated arrangement is provided in Table 2 below. The Gold sequence was selected for the code family due to its resistance to degradation when frequency shifted. The range resolution of the radar system was 0.15 m and the velocity resolution 0.46 m/s. The interfering/spoofing radar parameters were selected to be the same. The interferer radar was activated 0.361 ms after the start of each frame transmitted and from a distance of 5 m.

**Table 2 - Simulated example radar parameters**

| | | | |
|---|---|---|---|
| **Carrier freq. (GHz)** | 77 | **Code family** | Gold-4 |
| **RF Bandwidth (MHz)** | 500 | **N chirps** | 2048 |
| **Frame time (ms)** | 4.2 | **Code length** | 2047 |
| **Sampling rate (GHz)** | 1 | **PRI (us)** | 2.04 |

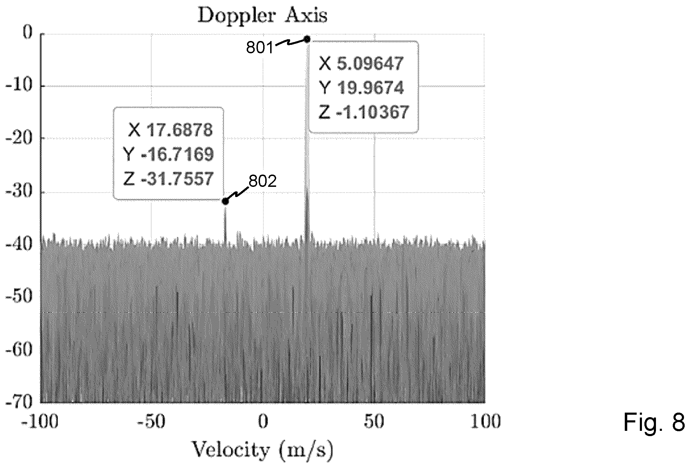

Figure 8 illustrates a plot along the Doppler axis of a processed received frame with the interferer radar inactive, showing two peaks 801, 802 corresponding to the correct velocity and range of first and second targets T₁, I₁.

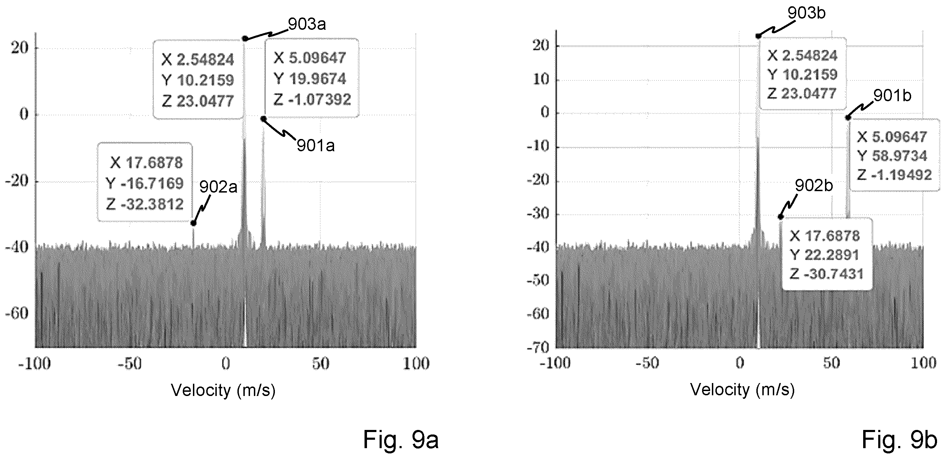

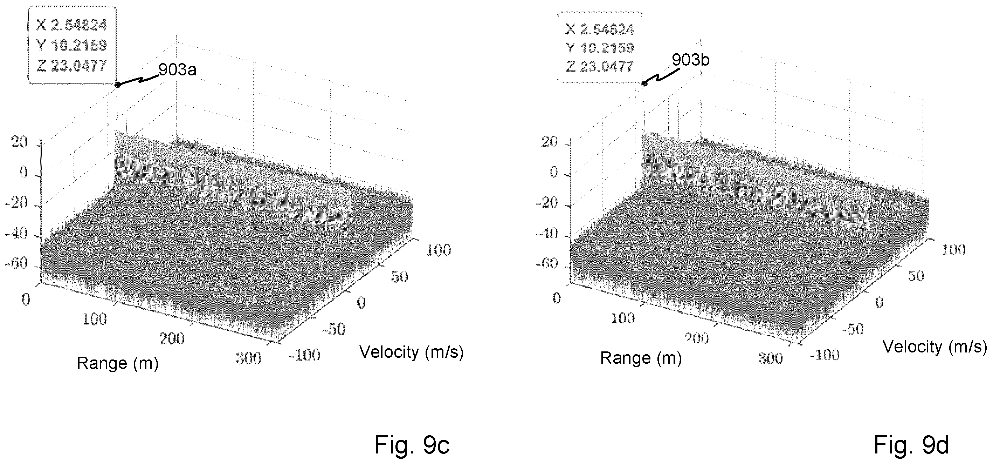

Figures 9a and 9b illustrate plots along the Doppler axis of respective received first and second frames with the interferer radar active and with no carrier offset, corresponding to case 1 described above. Figures 9c and 9d illustrate plots of the corresponding Range-velocity maps for the respective first and second frames. As described above, the first frame is transmitted with no frequency offset and the second frame is transmitted with a frequency offset, which in this example is 20 kHz. This results in the first and second peaks 901a, 902a in the first frame shifting to first and second peaks 901b, 902b in the second frame, the shift being around 39 m/s along the Doppler axis. A third peak 903a in the first frame that arises from the interferer radar is not shifted and the third peak 903b in the second frame remains at the same position because it is not affected by the frequency shift in the transmitted frame. By comparing the two RDMs derived from the first and second frames, the peak that does not change in the second frame can be identified as an interference peak and removed.

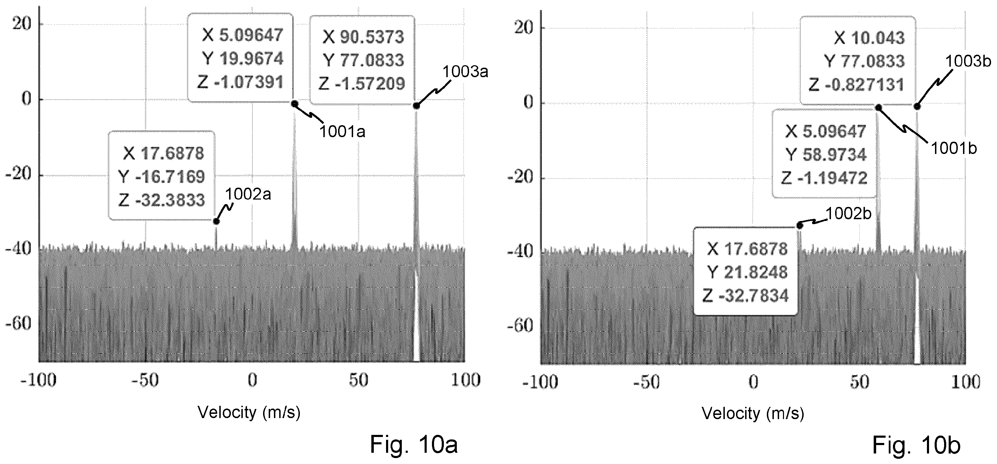

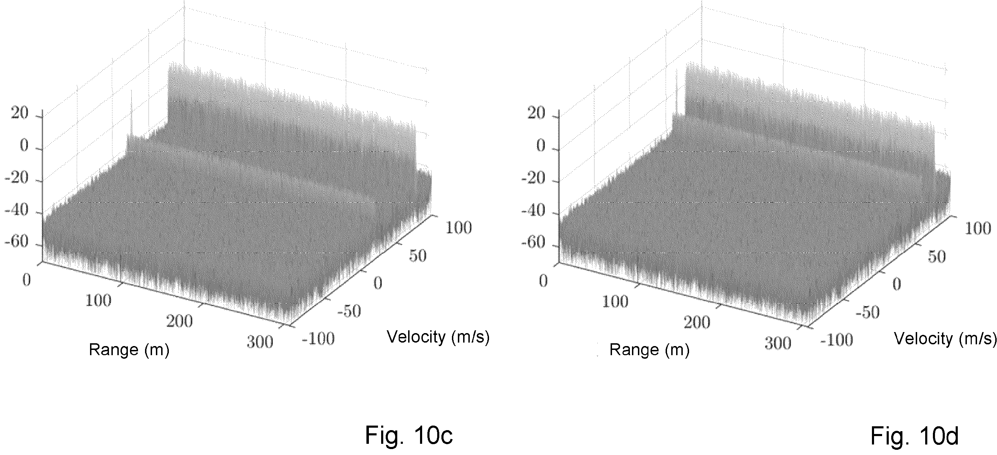

Figures 10a and 10b illustrate plots along the Doppler axis of respective received first and second frames with the interferer radar active and a carrier offset of 1.5 MHz, corresponding to case 2 described above. Figures 10c and 10d illustrate plots of the corresponding Range-velocity maps for the respective first and second frames. The first frame is transmitted with no frequency offset and the second frame is transmitted with a frequency offset, again of 20 kHz. This results in the first and second peaks 1001a, 1002a in the first frame shifting to first and second peaks 1001b, 1002b in the second frame by around 39 m/s along the Doppler axis. A ridge 1003a in the first frame that arises from the interferer radar is not shifted and the ridge 1003b in the second frame remains at the same position because it is not affected by the frequency shift in the transmitted frame. By comparing the two RDMs derived from the first and second frames, the ridge whose Doppler position does not change in the second frame can be identified as an interference. Since number of peaks do not change in the two RDMs, there is no FP or FN attack.

Based on the above simulated results, the presence of an interferer radar signal can be detected and removed by transmitting first and second frames and comparing the received frames, detecting peaks that do not move between the first and second frames as interference peaks. This applies whether or not a carrier offset is applied in the interferer radar.

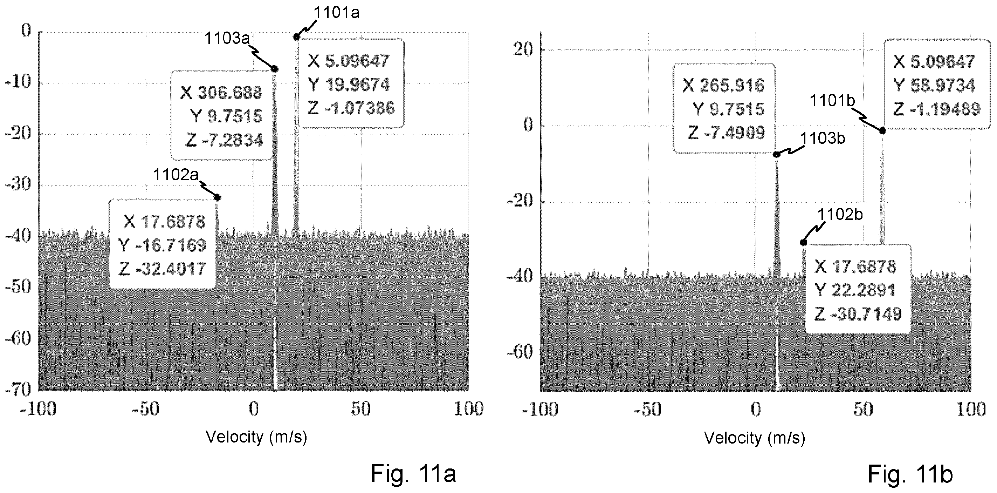

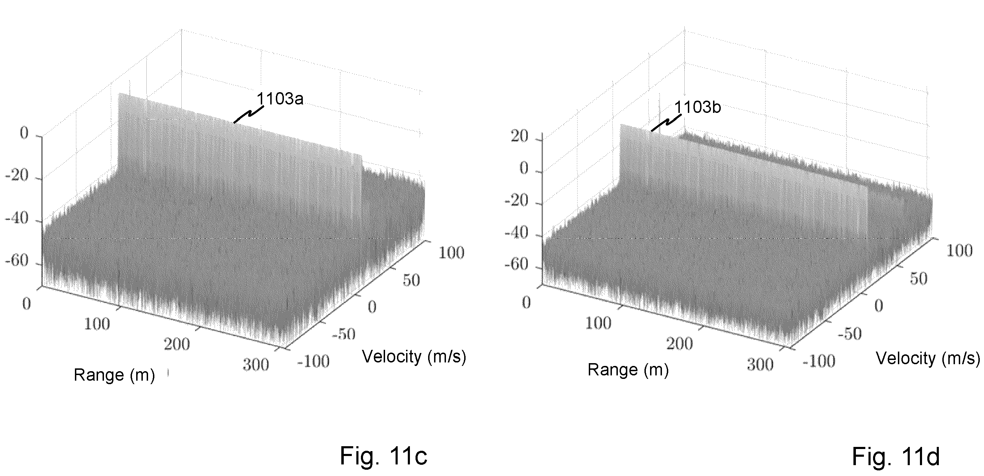

Figures 11a and 11b illustrate plots along the Doppler axis of respective received first and second frames with the interferer radar active and using a different code and no carrier offset, corresponding to case 3 described above. Figures 11c and 11d illustrate plots of the corresponding Range-velocity maps for the respective first and second frames. This results in a strong ridge 1103a (Figure 11c) at around half the relative velocity of the target, this case around 10 m/s. The amplitude of the ridge can mask real targets with lower peak amplitudes, in this case any target with a power less than around -7 dB. The first frame is transmitted with no offset and the second frame is transmitted with an offset. This results in the first and second peaks 1101a, 1102a in the first frame shifting to first and second peaks 1101b, 1102b in the second frame. A ridge1103a in the first frame that arises from the interferer radar is not shifted and the ridge1103b in the second frame remains at the same position because it is not affected by the frequency shift in the transmitted frame. By comparing the two RDMs derived from the first and second frames, the ridge whose Doppler position does not change in the second frame can be identified as an interference. Since number of peaks do not change in the two RDMs, there is no FP or FN attack..

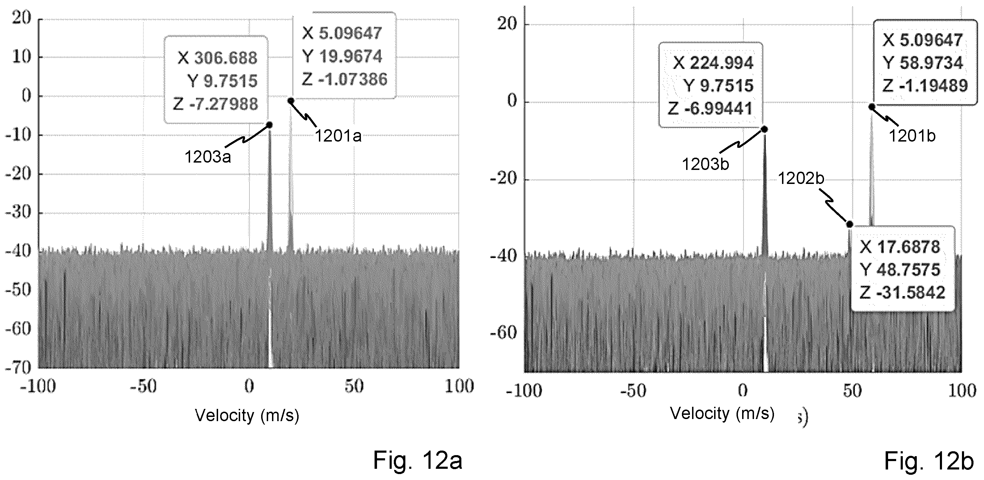

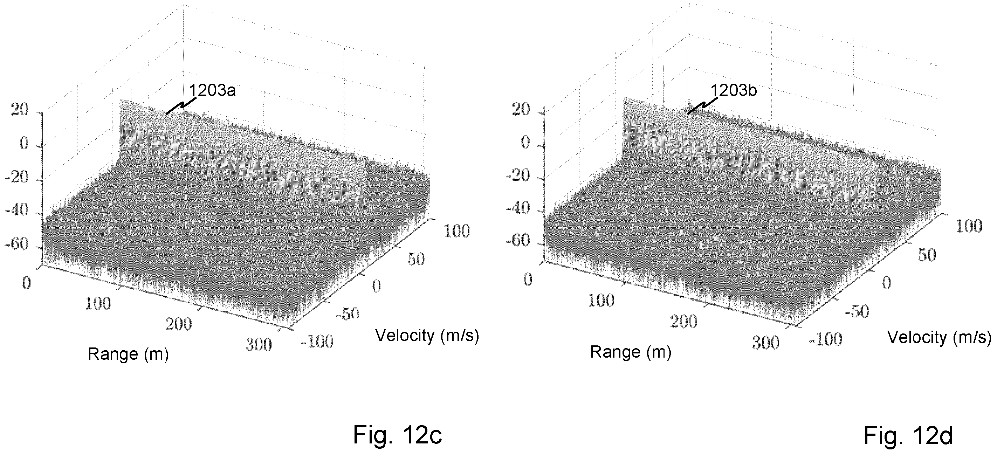

Figures 12a and 12b illustrate plots along the Doppler axis of respective received first and second frames with the interferer radar active and using a different code and no carrier offset, also corresponding to case 3 described above. Figures 12c and 12d illustrate plots of the corresponding Range-velocity maps for the respective first and second frames. Again, this results in a strong ridge 1203 (Figure 12c) at around half the relative velocity of the target, in this case around 10 m/s. In this case, the second peak 1202b that can be identified from the second frame is masked by the interferer ridge 1203a in the first frame. Once the FN attack is detected, and the offset removed from the second frame, the detections from the first and second frames can be combined.

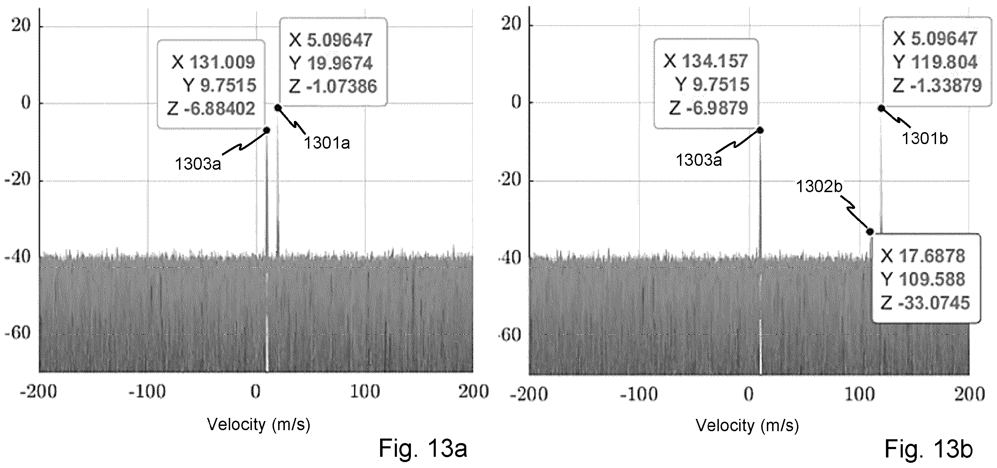

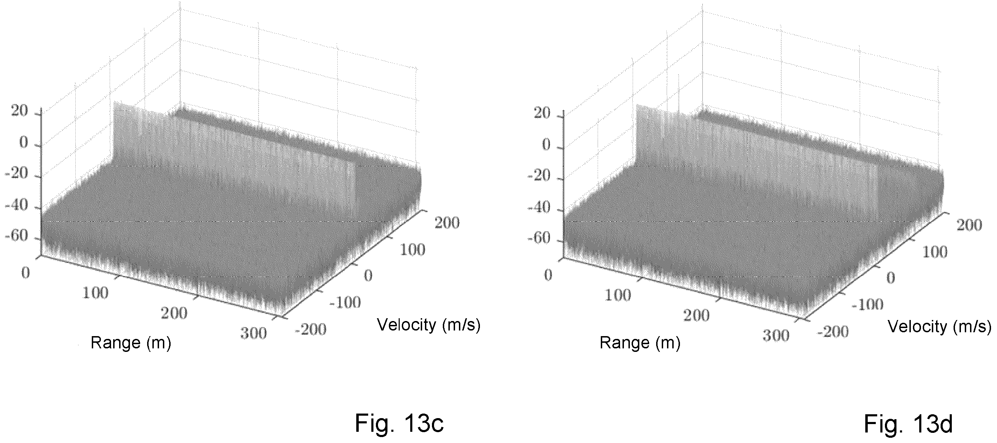

Figures 13a and 13b illustrate plots along the Doppler axis of respective received first and second frames with the interferer radar active and using a different code and no carrier offset, also corresponding to case 3 described above. Figures 13c and 13d illustrate plots of the corresponding Range-velocity maps for the respective first and second frames. In this example, a 51.3 kHz frequency shift is applied in the second frame, corresponding to a 100 m/s shift in velocity. This experiment is carried out with a larger frequency shift to show that the method works with a larger frequency shift as well. Due to the use of a sequence with a high Doppler tolerance (Gold-4 in this example), the power of the first and second peaks 1301b, 1302b in the second frame are not significantly affected. The targets are thereby moved outside of the normal +/-100 m/s region, leaving the interferer ridge 1303b within the normal region. As with the example in Figure 12, the second peak 1302b that can be identified from the second frame is masked by the interferer ridge 1303a in the first frame. Once the target peak 1302b is shifted and pushed out of the ridge 1303b, the peak detections from the first and second frames can be combined, resulting in the second peak 1302b being detectable despite the presence of the interferer.

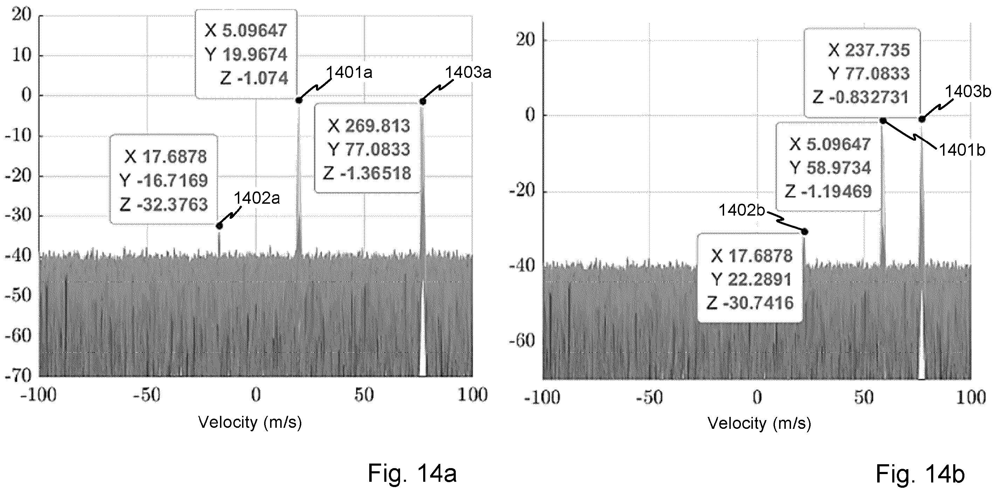

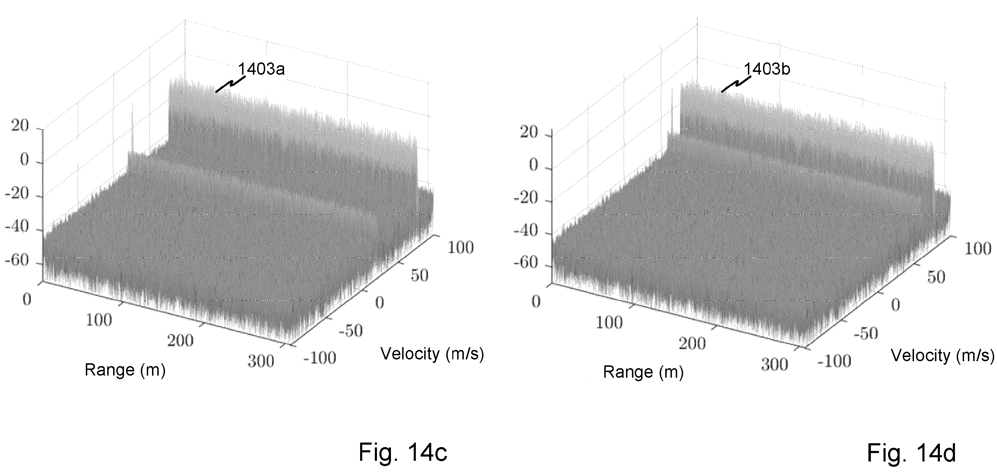

Figures 14a and 14b illustrate plots along the Doppler axis of respective received first and second frames with the interferer radar active and using a different code and a carrier offset of 1.5 MHz, corresponding to case 4 described above. Figures 14c and 14d illustrate plots of the corresponding Range-velocity maps for the respective first and second frames. The carrier offset results in an interferer ridge 1403a (Figure 14c) at around 77 m/s, detected as an interferer ridge 1403a, 1403b in the Doppler axis. With a frequency shift applied in the second frame, first and second peaks 1401a, 1402a in the first frame shift by around 39 m/s to first and second peaks 1401b, 1402b in the second frame but the interferer ridge 1403a, 1403b remains at the same position and can be removed.

In summary, the present disclosure provides a digital radar system, which can be operated in continuous transmission or pulsed mode, in which a frequency shift is applied at the transmitter side between consecutive transmitted frames, the amount of frequency shift being within the receiver bandwidth and in accordance with Doppler tolerance properties of the transmitted sequence. Received signals are processed with knowledge of the transmitted frequency shift, which allows for detection of unshifted peaks as ghost objects due to mutual interference and/or radar spoofing, allowing any shifted peaks to be detected as real targets. In addition, via the frequency shift, any targets that may be masked by high interference ridges can be detected and the masked targets revealed.

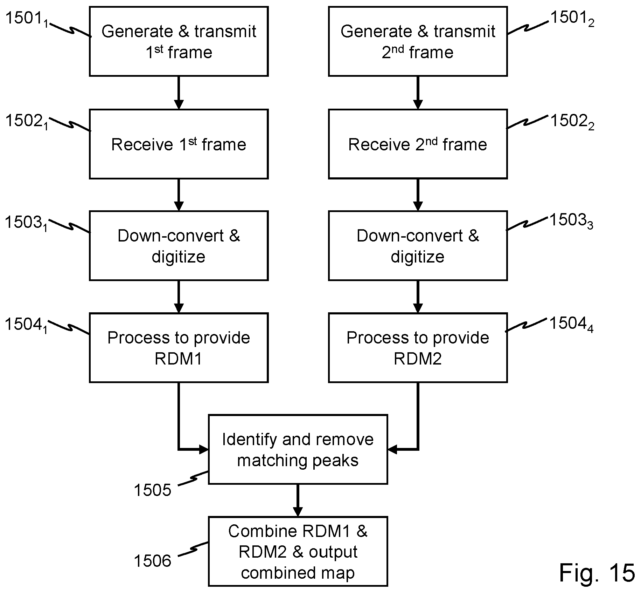

Figure 15 illustrates schematically a method of operating a radar system according to the present disclosure. In a first step 1501₁, 1501₂, first and second frames are generated and transmitted, both frames comprising a plurality of coded sequences, the second frame being transmitted with a frequency shift applied. First and second frames are received at steps 1502₁, 1502₂, each of which is down-converted and digitized at steps 1503₁, 1503₂ and processed at steps 1504₁, 1504₂ to provide respective first and second range-Doppler maps RDM₁, RDM₂. The RDMs are then compared at step 1505 to identify and remove any matching peaks. The peak detections may then be combined at step 1506 after removing the frequency shift from the second range Doppler map and a combined set of detections is obtained.

The first and second frames may be transmitted consecutively, i.e. with the first frame without a frequency offset applied and the second frame with a frequency offset applied, or may be transmitted in the reverse order, i.e. with the second frame transmitted before the first frame.

The method may be repeated, i.e. transmitting similar first and second frames and processing each pair of received frames similarly over time. The frequency offset may be changed in successive pairs of frames, which reduces the possibility of an intentional interferer being able to successfully spoof targets with knowledge of the frequency shift applied. The frequency shift applied in successive frames may for example be randomly selected from within a defined frequency range.

From reading the present disclosure, other variations and modifications will be apparent to the skilled person. Such variations and modifications may involve equivalent and other features which are already known in the art of radar systems and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A method of operating a radar system (500), the method comprising:
generating and transmitting (1501₁) a first transmitted frame at a carrier frequency, the first transmitted frame comprising a plurality of coded sequences;
generating and transmitting (1501₂) a second transmitted frame at the carrier frequency shifted by a frequency shift, the second transmitted frame comprising the plurality of coded sequences;
receiving (1502₁, 1502₂) first and second received frames comprising reflections from the respective first and second transmitted frames and interference;
down-converting and digitising (1503₁, 1503₂) the received first and second received frames;
processing (1504₁, 1504₂) the down-converted and digitised first and second received frames to provide first and second range Doppler maps, RDMs;
identifying (1505) targets in the first and second RDMs having matching Doppler peaks as interference peaks; and
removing (1505) the identified interference peaks from the first and second RDMs.

2. The method of claim 1, further comprising:
removing the frequency shift from the second RDM to provide a compensated second RDM and combining (1506) peak detections from the first RDM with peak detections from the compensated second RDM to provide an output combined peak detection set.

3. The method of claim 1 or claim 2, further comprising:
determining (707) first and second numbers of identified targets in the respective first and second RDMs; and
if the first and second numbers are unequal, detecting (708) a false negative attack.

4. The method of any one of claims 1 to 3, wherein a magnitude of the frequency shift is between around 10 kHz and around 100 kHz

5. The method of claim 4, wherein the magnitude of the frequency shift is between around 40 kHz and around 50 kHz.

6. The method of any preceding claim, wherein the method is repeated using a different value for the frequency shift.

7. The method of claim 6, wherein the different value is randomly selected from within a defined frequency range.

8. The method of any preceding claim, wherein the first and second frames are transmitted at different power levels, the method comprising identifying targets in the first and second RDMs having matching Doppler peak power levels as interference peaks.

9. A radar system (500) comprising:
a transmitter (501) configured to generate and transmit frames at a carrier frequency comprising a plurality of coded sequences, the transmitter (501) comprising a frequency shifter (508) arranged to apply a frequency shift to the carrier frequency of transmitted frames;
a receiver (502) configured to receive, down-convert and digitize frames comprising reflections from the transmitted frames;
a processor (518) configured to processing down-converted and digitised frames to provide range-Doppler maps, RDMs; and
a controller (512) configured to:
operate the transmitter (501) and frequency shifter (508) to generate and transmit a first transmitted frame at the carrier frequency and to generate and transmit a second transmitted frame at the carrier frequency shifted by a frequency shift;
operate the receiver (502) to receive first and second received frames comprising reflections from the respective first and second transmitted frames and interference, down-convert and digitize the received first and second received frames and process the down-converted and digitised first and second received frames to provide first and second RDMs;
identify targets in the first and second RDMs having matching Doppler peaks as interference peaks; and
remove the identified interference peaks from the first and second RDMs.

10. The radar system (500) of claim 9, wherein the controller (512) is configured to remove the frequency shift from the second RDM to provide a compensated second RDM and combine detections from the first RDM with detections from the compensated second RDM to provide an output combined detection set.

11. The radar system (500) of claim 9 or claim 10, wherein the controller (512) is configured to:
determine first and second numbers of identified targets in the respective first and second RDMs; and
if the first and second numbers are unequal, detect a false negative attack.

12. The radar system (500) of any one of claims 9 to 11, wherein a magnitude of the frequency shift is between around 10 kHz and around 100 kHz, optionally between around 40kHz and around 50 kHz.

13. The radar system (500) of any one of claims 9 to 12, wherein the controller (512) is configured to repeatedly operate the transmitter (501) and receiver (502) using a different value for the frequency shift.

14. The radar system (500) of claim 13, wherein the different value is randomly selected from within a defined frequency range.

15. The radar system (500) of any one of claims 9 to 14, wherein the controller (512) is configured to cause the first and second frames to be transmitted at different power levels and identify targets in the first and second RDMs having matching peak power levels as interference peaks.
